# EUROPÄISCHE PATENTSCHRIFT

(11) **EP 4 505 858 B1**
(45) Veröffentlichungstag und Bekanntmachung des Hinweises auf die Patenterteilung: **15.04.2026**
(21) Anmeldenummer: 24182821.9
(22) Anmeldetag: 18.06.2024
(51) Int. Cl.: A01D 41/14, A01D 34/28

(54) **BANDSCHNEIDWERK**
DRAPER HEADER
TÊTE DE RÉCOLTE À TAPIS

(30) Priorität: 08.08.2023 DE 102023121048
(43) Veröffentlichungstag der Anmeldung: 12.02.2025
(73) Patentinhaber: CLAAS Selbstfahrende Erntemaschinen GmbH, 33428 Harsewinkel (DE)
(72) Erfinder: Füchtling, Christian, 48317 Drenstein Rinkerode (DE)
(74) Vertreter: CLAAS Gruppe

(56) Entgegenhaltungen:
- EP-B1- 3 420 796
- DE-A1- 102011 116 341
- US-B1- 8 087 224

## Beschreibung

Die vorliegende Erfindung betrifft ein Bandschneidwerk gemäß dem Oberbegriff des Anspruches 1. Weiterhin ist ein selbstfahrender Mähdrehscher gemäß Anspruch 12 Gegenstand der Erfindung.

Ein Bandschneidwerk der eingangs genannten Art ist aus der EP 3 420 796 B1 sowie der US 8,087,224 B1 bekannt.

DE 102011 116 341 A1 betrifft ein Bandschneidwerk gemäß dem Oberbegriff des Anspruchs 1.

Die genannten Druckschriften beschreiben Bandschneidwerke, die ein Mittensegment mit einem mittleren Rahmensegment und zwei Seitensegmente mit jeweils einem äußeren Rahmensegment umfassen. Das jeweilige Seitensegment ist durch ein Rahmengelenk schwenkbar mit dem Mittensegment verbunden. Das jeweilige Rahmengelenk umfasst eine Schwenkachse, um die das jeweilige Seitensegment schwenkbar ist. Die Seitensegmente sind um die horizontal verlaufende Schwenkachse des Rahmengelenks relativ zum Mittensegment in vertikaler Richtung verschwenkbar, um unebenes Gelände auszugleichen. Weiterhin umfassen die Bandschneidwerke einen flexiblen Messerbalken, welcher an um eine parallel zum Messerbalken verlaufende Drehachse schwenkbar an den Rahmensegmenten angelenkten Tragarmen angeordnet ist. Der flexible Messerbalken folgt einer Bodenkontur im Wesentlichen auf dieser aufliegend, indem der Messerbalken innerhalb eines Schwenkbereichs durch Auslenkung der Tragarme um die Drehachse zwischen einer unteren Stellung und einer oberen Stellung überführbar ist. In der Betriebsposition des Messerbalkens, in welcher dieser sich in der oberen Stellung befindet, schneidet eine gedachte Verlängerung der in Richtung des Messerbalkens geneigten Schwenkachse den Messerbalken. Dies wirkt sich im Betrieb auf den Messerbalken dahingehend aus, dass in der unteren Stellung des Messerbalkens, in der dieser der Bodenkontur folgen soll, der vertikale Abstand zur Schwenkachse am größten ist. Eine Bewegung eines der Seitensegmente nach oben führt zu einer Streckung des Messerbalkens im Bereich der Schwenkachse. Eine Bewegung eines der Seitensegmente nach unten führt dagegen zu einer Stauchung des Messerbalkens im Bereich der Schwenkachse. Der gestauchte Messerbalken hebt teilweise ab und verliert den Bodenkontakt, so dass Pflanzen ungeerntet zurückbleiben. Das Strecken des Messerbalkens, wenn das Seitensegment nach oben geht, kann durch die übermäßige Belastung zum frühzeitigen Ermüden beitragen.

Ausgehend vom vorstehend genannten Stand der Technik liegt der Erfindung die Aufgabe zugrunde, ein Bandschneidwerk der eingangs genannte Art weiterzubilden, welches die nachteiligen Auswirkungen des Standes der Technik vermeidet oder zumindest reduziert.

Diese Aufgabe wird erfindungsgemäß durch ein Bandschneidwerk mit den Merkmalen des Anspruches 1 gelöst. Vorteilhafte Weiterbildungen sind Gegenstand der abhängigen Ansprüche.

Gemäß dem Anspruch 1 wird ein Bandschneidwerk vorgeschlagen, umfassend ein Mittensegment mit einem mittleren Rahmensegment und zwei Seitensegmente mit jeweils einem äußeren Rahmensegment, wobei das jeweilige Seitensegment durch ein eine Schwenkachse umfassendes Rahmengelenk schwenkbar mit dem Mittensegment verbunden ist, wobei das jeweilige Rahmengelenk eine Schwenkachse umfasst, um die das jeweilige Seitensegment schwenkbar ist, sowie einen flexiblen Messerbalken, welcher einer Bodenkontur im Wesentlichen aufliegend folgt, indem der Messerbalken an um eine parallel zum Messerbalken verlaufende Drehachse schwenkbar an den Rahmensegmenten angelenkten Tragarmen angeordnet ist, wobei der Messerbalken durch Auslenkung der Tragarme um die Drehachse innerhalb eines Schwenkbereichs zwischen einer unteren Stellung und einer oberen Stellung überführbar ist. Erfindungsgemäß ist vorgesehen, dass die Rahmengelenke derart zum Boden geneigt ausgerichtet sind, dass eine virtuelle Verlängerung der jeweiligen Schwenkachse den Messerbalken in einer Mittenstellung zwischen der unteren Stellung und der oberen Stellung schneidet, wobei der Schwenkbereich
- durch eine Endlage des Messerbalkens in der unteren Stellung und
- durch eine Endlage des Messerbalkens in der oberen Stellung
mechanisch begrenzt ist.

Der hierdurch erreichte Effekt besteht in einer Angleichung des maximal zurückzulegenden Schwenkweges zwischen dem Messerbalken und der jeweiligen Schwenkachse in der Betriebssituation, in der sich der Messerbalken in seiner unteren Stellung befindet und das Seitensegment um die Schwenkachse nach oben oder nach unten ausgelenkt wird. Insbesondere kann der sich in dieser Betriebssituation einstellende maximal zurückzulegende Schwenkweg im Wesentlichen halbiert werden.

Hierzu kann der Messerbalken in seiner Mittenstellung einen im Wesentlichen gleichen Abstand zur Endlage des Messerbalkens in der unteren Stellung und zur Endlage des Messerbalkens in der oberen Stellung aufweisen. Hierdurch kann das Stauchen oder Strecken des Messerbalkens im Bereich der Schwenkachse bei einer vertikalen Auslenkung eines der Seitensegmente minimiert werden. In der unteren Stellung und in der oberen Stellung ist der Schwenkbereich mechanisch begrenzt.

Bevorzugt können die Rahmengelenke am mittleren Rahmensegment angeordnet sein.

Insbesondere können die Rahmengelenke als am mittleren Rahmensegment angeordnete Gleitlageranordnungen ausgeführt sein. Bevorzugt sind jeweils zwei Gleitlageranordnungen vorgesehen, welcher der schwenkbaren Anlenkung des jeweiligen Seitensegmentes am Mittensegment dienen.

Dabei kann jeweils eine Gleitlageranordnung im Bereich einer dem Messerbalken zugewandten Vorderwand und jeweils eine Gleitlageranordnung im Bereich einer dem Messerbalken abgewandten Rückwand des mittleren Rahmensegmentes angeordnet sein.

Bevorzugt kann das jeweilige Seitensegment durch einen ansteuerbaren Aktuator relativ zum Mittensegment positionierbar sein. Insbesondere können die Aktuatoren als doppeltwirkende Hydraulikzylinder ausgeführt sein. Der Mähdrescher kann bevorzugt eine Steuereinheit umfassen, die zur Ansteuerung von Linearaktoren zur Höhenverstellung des Einzugskanals und der Aktuatoren am Bandschneidwerk eingerichtet ist.

Des Weiteren können hinter dem Messerbalken Fördervorrichtungen angeordnet sein, die auf den Seitensegmenten als jeweils ein endlos umlaufendes, seitwärts förderndes Förderband ausgeführt sind und auf dem Mittensegment als ein endlos umlaufendes, senkrecht zu den benachbarten Förderbändern förderndes Förderband. Die Förderbänder der Seitensegmente fördern quer zur Förderrichtung des zumindest einen Förderbandes des Mittensegments.

Weiterhin können in einer zu den Tragarmen parallel verlaufenden Ebene zumindest an den äußeren Rahmensegmenten der Seitensegmente schwenkbar angelenkte Tragelemente vorgesehen sein, welche die Förderbänder der Seitensegmente tragen. Am mittleren Rahmensegment des Mittensegmentes können ebenfalls schwenkbar angelenkte Tragelemente angeordnet sein, welche die sich über die Schwenkachse hinaus auf das Mittensegment erstreckenden Förderbänder tragen.

Insbesondere kann die jeweilige Fördervorrichtung der Seitensegmente eine erste am Mittensegment angeordnete Umlenkrolle und eine zweite endseitig am jeweiligen Seitensegment angeordnete Umlenkrolle umfassen, um die das jeweilige endlose Förderband umläuft.

Gemäß einer Weiterbildung können das Förderband des Mittensegmentes und die Förderbänder der Seitensegmente mit voneinander unabhängigen Bandgeschwindigkeiten betreibbar sein. Zum unabhängigen Antreiben der Förderbänder ist jeweils ein Antriebsmotor vorgesehen, der als ein Elektromotor oder Hydromotor ausgeführt sein kann.

Insbesondere kann die im Bereich der dem Messerbalken zugewandten Vorderwand angeordnete Gleitlageranordnung im Wesentlichen auf Höhe der Tragelemente angeordnet sein.

Die eingangs gestellte Aufgabe wird weiterhin durch einen selbstfahrenden Mähdrescher mit einem Bandschneidwerk nach einem der Ansprüche 1 bis 11 gelöst. Auf die Vorteile des erfindungsgemäßen Bandschneidwerks darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine Ansicht eines an einem Einzugskanal eines Mähdreschers angeordneten Bandschneidwerkes;
- Fig. 2: schematisch und exemplarisch eine Teilansicht des Bandschneidwerks im Bereich einer Schwenkachse zwischen einem Mittensegment und einem Seitensegment;
- Fig. 3: schematisch und exemplarisch eine Teilansicht des Bandschneidwerkes gemäß Fig. 1 von hinten; und
- Fig. 4: schematisch und exemplarisch eine Schnittansicht im Verbindungsbereich zwischen dem Mittensegment und einem der Seitensegmente.

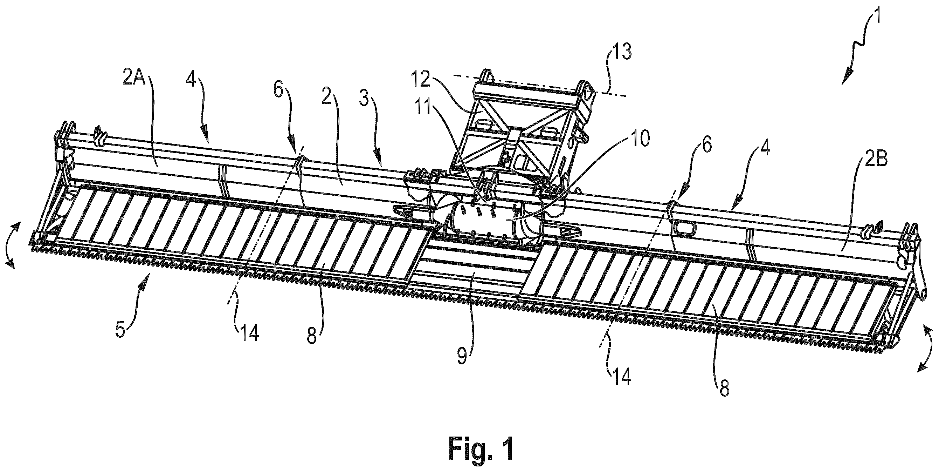

In Fig. 1 ist schematisch und exemplarisch eine Ansicht eines an einem Einzugskanal 12 eines Mähdreschers angeordneten Bandschneidwerkes 1. Das Bandschneidwerk 1 weist einen segmentierten Rahmen auf. Das Bandschneidwerk 1 weist ein Mittensegment 3 mit einem mittleren Rahmensegment 2 und zwei Seitensegmente 4 mit einem äußeren Rahmensegment 2A bzw. 2B auf. Die Seitensegmente 4 sind benachbart zu dem Mittensegment 3 angeordnet. An dem Mittensegment 3 und den Seitensegmenten 4 ist auf der dem segmentierten Rahmen gegenüberliegenden Vorderseite des Bandschneidwerkes 1 ein bodenkopierender Messerbalken 5 angeordnet, der sich im Wesentlichen über die gesamte Breite des Bandschneidwerkes 1 erstreckt. Weiterhin ist eine segmentiert ausgeführte - nicht dargestellte - Haspel vorgesehen, die sich im Wesentlichen über die gesamte Breite des Bandschneidwerkes 1 erstreckt.

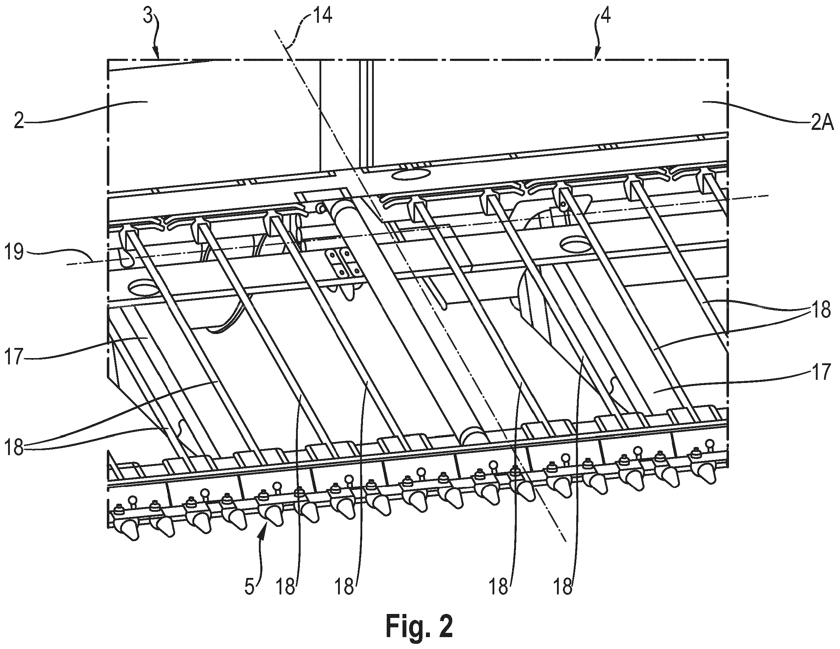

Der flexible Messerbalken 5 ist mittels an den Rahmensegmenten 2, 2A, 2B angelenkten Tragarmen 17 relativ zu diesem in vertikaler Richtung schwenkbar, wie in Fig. 2 dargestellt. Die Tragarme 17 sind um eine parallel zum Messerbalken 5 verlaufende Drehachse 19 schwenkbar an den Rahmensegmenten 2, 2A, 2B angelenkt.

Von dem Messerbalken 5 abgetrenntes Erntegut wird einer hinter dem Messerbalken 5 angeordneten Fördervorrichtung zugeführt, die auf den jeweiligen Seitensegmenten 4 als ein endlos umlaufendes Förderband 8 ausgeführt ist. Die endlos umlaufenden Förderbänder 8 sind benachbart zu dem Mittensegment 3 angeordnet, um von dem Messerbalken 5 abgeschnittenes Erntegut seitwärts, d.h. quer zur Fahrtrichtung des Mähdreschers, in Richtung des Mittensegments 3 zu transportieren und einer als angetriebenen Einzugswalze 10 ausgeführten Einzugsvorrichtung des Bandschneidwerks 1 zuzuführen.

Der Mittenabschnitt 3 umfasst ebenfalls eine als endlos umlaufendes Förderband 9 ausgeführte Fördervorrichtung. Das Förderband 9 des Mittensegments 3 fördert dabei quer zur Förderrichtung der seitwärts fördernden Förderbänder 8 der Seitensegmente 4. Die Einzugswalze 10 führt das von den endlos umlaufenden Förderbändern 8 bzw. 9 dem Mittenabschnitt 3 seitlich zugeführte Erntegut einer in dem mittleren Rahmensegment 2 vorgesehenen, hinter der Einzugswalze 10 befindlichen Öffnung 11 zu. Durch die Öffnung 11 wird das aufgenommene Erntegut durch den am Mähdrescher angeordneten Einzugskanal 12, an dem das Bandschneidwerk 1 lösbar befestigt ist, dem Mähdrescher zur weiteren Verarbeitung zugeführt. Im Einzugskanal 12 ist eine Fördervorrichtung angeordnet, welche das von der Einzugswalze 10 zugeführte Erntegut annimmt und in den Mähdrescher zur weiteren Bearbeitung weiterfördert. Der Einzugskanal 12 ist zur Höhenverstellung des Bandschneidwerks 1 durch - nicht dargestellte - Linearaktoren um eine horizontal verlaufende Achse 13 schwenkbar am Mähdrescher angelenkt.

In einer zu den Tragarmen 17 parallel und oberhalb verlaufenden Ebene sind Tragelemente 18 an den Rahmensegmenten 2, 2A, 2B schwenkbar angelenkt, welche die umlaufenden Förderbänder 8, 9 tragen, wie in Fig. 2 beispielhaft dargestellt ist. Das jeweilige seitwärts fördernde Förderband 8 umfasst eine erste Umlenkrolle, die am Mittensegment 3 angeordnet ist, und eine zweite Umlenkrolle, die endseitig am jeweiligen Seitensegment 4, diametral zur ersten Umlenkrolle, angeordnet ist, um die das jeweilige Förderband 8 eines Seitensegments 4 endlos umläuft.

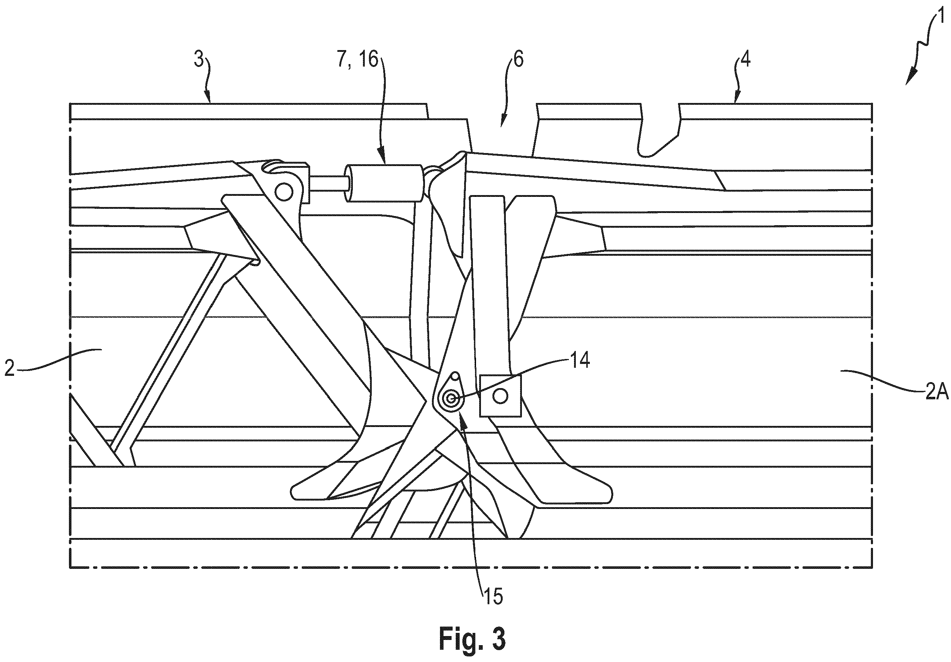

In Fig. 3 ist schematisch und exemplarisch eine Teilansicht des Bandschneidwerkes gemäß Fig. 1 von hinten dargestellt. Das jeweilige Seitensegment 4 ist durch ein eine Schwenkachse 14 umfassendes Rahmengelenk 15 schwenkbar mit dem Mittensegment 3 verbunden. Das jeweilige Seitensegment 4 ist durch einen ansteuerbaren Aktuator 7 durch Schwenken um die Schwenkachse 14 relativ zum Mittensegment 3 positionierbar ist. Die Aktuatoren 7 sind hier und vorzugsweise als doppeltwirkende Hydraulikzylinder 16 ausgeführt. Hierdurch sind die äußeren Rahmensegmente 2A, 2B in ihren Verbindungsbereichen 6 gelenkig an das mittlere Rahmensegment 2 gekoppelt. Das Schwenken der äußeren Rahmensegmente 2A, 2B respektive der Seitensegmente 4 relativ zum mittleren Rahmensegment 2 bzw. dem Mittensegment 3 ermöglicht eine verbesserte Anpassung an die Bodenkontur. Zusätzlich zur gelenkigen Anpassung der äußeren Rahmensegmente 2A, 2B erfolgt die Bodenkonturanpassung durch den flexiblen Messerbalken 5. Der flexible Messerbalken 5 kann mit den an die Rahmensegmente 2, 2A, 2B um die Drehachse 19 schwenkbar gekoppelten Tragarmen 17 innerhalb eines Auslenkbereichs durch vertikale Auslenkbewegungen dem Untergrund folgen.

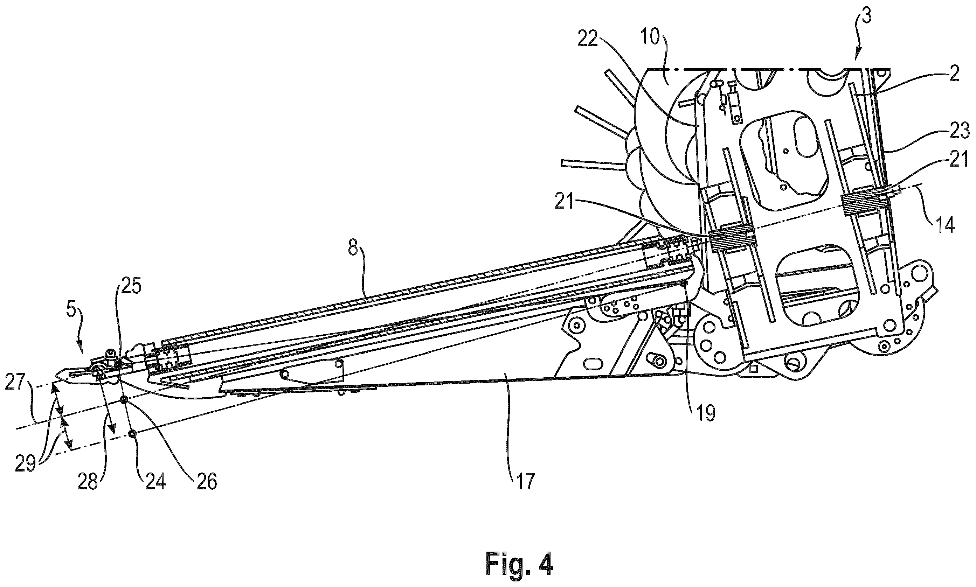

In Fig. 4 ist schematisch und exemplarisch eine Schnittansicht im Verbindungsbereich 6 zwischen dem Mittensegment 3 und einem der Seitensegmente 4 dargestellt. Die Schwenkachse 14 verläuft durch die am mittleren Rahmensegment 2 angeordneten Rahmengelenke 15. Die Rahmengelenke 15 können als am mittleren Rahmensegment 2 angeordnete Gleitlageranordnungen 21 ausgeführt sein. Jeweils eine Gleitlageranordnung 21 ist im Bereich einer dem Messerbalken 5 zugewandten Vorderwand 22 und jeweils eine Gleitlageranordnung 21 ist im Bereich einer dem Messerbalken 5 abgewandten Rückwand 23 des mittleren Rahmensegmentes 2 angeordnet. Die Rahmengelenke 15 können scharnierartig ausgeführt sein.

Der flexible Messerbalken 5 folgt beim Erntevorgang einer Bodenkontur im Wesentlichen auf dieser aufliegend. Hierzu ist der Messerbalken 5 innerhalb eines Schwenkbereichs 28 zwischen einer unteren Stellung 24 und einer oberen Stellung 25 durch vertikales Auslenken der Tragarme 17 um die Drehachse 19 überführbar. In Fig. 4 ist das Bandschneidwerk 1 in seiner Endlage in der oberen Stellung 25 gezeigt. Die obere Stellung 25 entspricht einer Betriebssituation des Bandschneidwerks 1, in welcher der Messerbalken 5 über die gesamte Arbeitsbreite des Bandschneidwerks 1 starr ist. In der oberen Stellung 25 als Endlage ist der Schwenkweg mechanisch begrenzt.

Der flexible Messerbalken 5 ist in eine untere Stellung 24, in welcher der Messerbalken 5 einer Bodenkontur im Wesentlichen auf dem Boden aufliegend folgt, überführbar. In seiner Endlage in der unteren Stellung 24 kann der Messerbalken 5 einer Bodenunebenheit durch eine vertikale Ausgleichsbewegung folgen, indem zumindest einer der Tragarme 17 um die Drehachse 19 innerhalb des Schwenkbereichs 28 abschnittsweise nach oben geschwenkt wird. In der unteren Stellung 24 als Endlage ist der Schwenkweg ebenfalls mechanisch begrenzt.

Die Rahmengelenke 15 sind derart zum Messerbalken 5 geneigt ausgerichtet, dass eine virtuelle Verlängerung 27 der jeweiligen Schwenkachse 14 den Messerbalken 5 in einer Mittenstellung 26 zwischen der unteren Stellung 24 und der oberen Stellung 25 schneidet. Die virtuelle Verlängerung 27 verläuft durch die Rahmengelenke 15 in Richtung Boden.

In der Mittenstellung 26 des Messerbalkens 5 weist dieser einen im Wesentlichen gleichen Abstand 29 zur Lage des Messerbalkens 5 in der unteren Stellung 24 und zur Lage des Messerbalkens 5 in der oberen Stellung 25 auf. In der Mittenstellung 26 ist der vertikale Abstand 29 des Messerbalkens 5 zur Endlage des Messerbalkens 5 in der unteren Stellung 24 und zur Endlage des Messerbalkens 5 in der oberen Stellung 25 im Wesentlichen gleich.

Der hierdurch erreichte Effekt besteht in einer Angleichung des maximal zurückzulegenden Schwenkweges zwischen dem Messerbalken 5 und der jeweiligen Schwenkachse 14 in der Betriebssituation, in der sich der Messerbalken 5 in seiner unteren Stellung 24 befindet und zumindest eines der Seitensegmente 4 um die Schwenkachse 14 nach oben oder nach unten ausgelenkt wird. Insbesondere kann der sich einstellende maximal zurückzulegende Schwenkweg in dieser Betriebssituation, in der sich der Messerbalken 5 in der unteren Stellung 24 befindet, im Wesentlichen halbiert werden.

Der Abstand 29 in der Mittenstellung 26 des Messerbalkens 5 zur Lage des Messerbalkens 5 in der unteren Stellung 24 und zur Lage des Messerbalkens 5 in der oberen Stellung 26 ist im Wesentlichen gleich. Hierdurch kann das Stauchen oder Strecken des Messerbalkens 5 im Bereich der Schwenkachse 14 bei einer Auslenkung eines der Seitensegmente 4 um die Schwenkachse 14 minimiert werden.

Dadurch wird bei einer Bewegung eines der Seitensegmente 4 nach unten in die untere Stellung 24 das Auftreten einer Stauchung des Messerbalkens 5 im Bereich der Schwenkachse 14 reduziert. In umgekehrter Richtung, wenn eines der Seitensegmente 4 nach oben in die obere Stellung 25 bewegt wird, wird ein Strecken des Messerbalkens 5 reduziert.

Diese Reduzierung des Stauchens bzw. Streckens des Messerbalkens 5 im Bereich der Schwenkachsen 14 zwischen dem Mittensegment 3 und den Seitensegmenten 4 führt dazu, dass der gestauchte Messerbalken 5 in geringerem Maße vom Boden abhebt, wodurch der Bodenkontakt besser erhalten bleibt und weniger Pflanzen in diesem Bereich des Messerbalkens 5 ungeerntet zurückbleiben. Das Reduzieren des Streckens des Messerbalkens 5, wenn das Seitensegment 4 nach oben geht, führt zu einer Reduzierung der mechanischen Belastung.

### Bezugszeichenliste

- 1: Bandschneidwerk
- 2: Mittleres Rahmensegment
- 2A: Äußeres Rahmensegment
- 2B: Äußeres Rahmensegment
- 3: Mittensegment
- 4: Seitensegment
- 5: Messerbalken
- 6: Verbindungsbereich
- 7: Aktuator
- 8: Förderband
- 9: Förderband
- 10: Einzugswalze
- 11: Öffnung
- 12: Einzugskanal
- 13: Achse
- 14: Schwenkachse
- 15: Rahmengelenk
- 16: Hydraulikzylinder
- 17: Tragarm
- 18: Tragelement
- 19: Drehachse

- 21: Gleitlageranordnung
- 22: Vorderwand
- 23: Rückwand
- 24: Untere Stellung
- 25: Obere Stellung
- 26: Mittlere Stellung
- 27: Virtuelle Verlängerung
- 28: Schwenkbereich
- 29: Abstand

## Patentansprüche

1. Bandschneidwerk (1), umfassend
- ein Mittensegment (3) mit einem mittleren Rahmensegment (2) und zwei Seitensegmente (4) mit jeweils einem äußeren Rahmensegment (2A, 2B), wobei das jeweilige Seitensegment (4) durch ein eine Schwenkachse (14) umfassendes Rahmengelenk (15) schwenkbar mit dem Mittensegment (3) verbunden ist,
sowie
- einen flexiblen Messerbalken (5), welcher einer Bodenkontur im Wesentlichen aufliegend folgt, indem der Messerbalken (5) an um eine parallel zum Messerbalken (5) verlaufende Drehachse (19) schwenkbar an den Rahmensegmenten (2, 2A, 2B) angelenkten Tragarmen (17) angeordnet ist,
wobei der Messerbalken (5) durch Auslenkung der Tragarme (17) um die Drehachse (19) innerhalb eines Schwenkbereichs (28) zwischen einer unteren Stellung (24) und einer oberen Stellung (25) überführbar ist,
**dadurch gekennzeichnet,**
**dass** die Rahmengelenke (15) derart zum Boden geneigt ausgerichtet sind, dass eine virtuelle Verlängerung (27) der jeweiligen Schwenkachse (14) den Messerbalken (5) in einer Mittenstellung (26) zwischen der unteren Stellung (24) und der oberen Stellung (25) schneidet, wobei der Schwenkbereich (28)
- durch eine Endlage des Messerbalkens (5) in der unteren Stellung (24) und
- durch eine Endlage des Messerbalkens (5) in der oberen Stellung (25) mechanisch begrenzt ist.

2. Bandschneidwerk (1) nach Anspruch 1, **dadurch gekennzeichnet, dass** der Messerbalken (5) in seiner Mittenstellung (26) einen im Wesentlichen gleichen Abstand
- zu der Endlage des Messerbalkens (5) in der unteren Stellung (24) und
- zu der Endlage des Messerbalkens (5) in der oberen Stellung (25) aufweist.

3. Bandschneidwerk (1) nach Anspruch 1 oder 2, **dadurch gekennzeichnet, dass** die Rahmengelenke (15) am mittleren Rahmensegment (2) angeordnet sind.

4. Bandschneidwerk (1) nach einem der Ansprüche 1 bis 3, **dadurch gekennzeichnet, dass** die Rahmengelenke (15) als am mittleren Rahmensegment (2) angeordnete Gleitlageranordnungen (21) ausgeführt sind.

5. Bandschneidwerk (1) nach Anspruch 4, **dadurch gekennzeichnet, dass** jeweils eine Gleitlageranordnung (21) im Bereich einer dem Messerbalken (5) zugewandten Vorderwand (22) und jeweils eine Gleitlageranordnung (21) im Bereich einer dem Messerbalken (5) abgewandten Rückwand (23) des mittleren Rahmensegmentes (2) angeordnet ist.

6. Bandschneidwerk (1) nach einem der vorangehenden Ansprüche, **dadurch gekennzeichnet, dass** das jeweilige Seitensegment (4) durch einen ansteuerbaren Aktuator (7) relativ zum Mittensegment (3) positionierbar ist.

7. Bandschneidwerk (1) nach einem der vorangehenden Ansprüche, **dadurch gekennzeichnet, dass** hinter dem Messerbalken (5) Fördervorrichtungen angeordnet sind, die auf den Seitensegmenten (4) als jeweils ein endlos umlaufendes, seitwärts förderndes Förderband (8) ausgeführt sind und auf dem Mittensegment (3) als ein endlos umlaufendes, senkrecht zu den benachbarten Förderbändern (8) förderndes Förderband (9).

8. Bandschneidwerk (1) nach Anspruch 7, **dadurch gekennzeichnet, dass** in einer zu den Tragarmen (17) parallel verlaufenden Ebene zumindest an den äußeren Rahmensegmenten (2A, 2B) der Seitensegmente (4) schwenkbar angelenkte Tragelemente (18) vorgesehen sind, welche die Förderbänder (8) der Seitensegmente (4) tragen.

9. Bandschneidwerk (1) nach Anspruch 7 oder 8, **dadurch gekennzeichnet, dass** die jeweilige Fördervorrichtung der Seitensegmente (4) eine erste am Mittensegment (3) angeordnete Umlenkrolle und eine zweite endseitig am jeweiligen Seitensegment (4) angeordnete Umlenkrolle umfasst, um die das jeweilige seitwärts fördernde Förderband (8) umläuft.

10. Bandschneidwerk (1) nach einem der Ansprüche 7 bis 9, **dadurch gekennzeichnet, dass** das Förderband (9) des Mittensegmentes (3) und die Förderbänder (8) der Seitensegmente (4) mit voneinander unabhängigen Bandgeschwindigkeiten betreibbar sind.

11. Bandschneidwerk (1) nach einem der Ansprüche 7 bis 10, **dadurch gekennzeichnet, dass** die im Bereich der dem Messerbalken (5) zugewandten Vorderwand (22) angeordnete Gleitlageranordnung (21) im Wesentlichen auf Höhe der Tragelemente (18) angeordnet ist.

12. Mähdrescher mit einem Bandschneidwerk (1) nach einem der Ansprüche 1 bis 11.

## Claims

1. Draper header (1) comprising
- a middle segment (3), which has a middle frame segment (2), and two side segments (4), which have in each case one outer frame segment (2A, 2B), wherein the respective side segment (4) is connected pivotably to the middle segment (3) by a frame joint (15) which comprises a pivot axis (14),
and
- a flexible cutter bar (5) which follows a ground contour in a manner substantially resting on it in that the cutter bar (5) is arranged on supporting arms (17) which are articulated on the frame segments (2, 2A, 2B) in a manner pivotable about an axis of rotation (19) extending parallel to the cutter bar (5),
wherein the cutter bar (5) is transferable between a lower position (24) and an upper position (25) within a pivoting range (28) by way of deflection of the supporting arms (17) about the axis of rotation (19),
**characterized**
**in that** the frame joints (15) are oriented inclined to the ground in such a way that a virtual extension (27) of the respective pivot axis (14) intersects the cutter bar (5) at a middle position (26) between the lower position (24) and the upper position (25), wherein the pivoting range (28)
- is limited mechanically by an end position of the cutter bar (5) at the lower position (24) and
- by an end position of the cutter bar (5) at the upper position (25).

2. Draper header (1) according to Claim 1, **characterized in that**, at its middle position (26), the cutter bar (5) has a substantially equal spacing
- to the end position of the cutter bar (5) at the lower position (24) and
- to the end position of the cutter bar (5) at the upper position (25).

3. Draper header (1) according to Claim 1 or 2, **characterized in that** the frame joints (15) are arranged on the middle frame segment (2).

4. Draper header (1) according to one of Claims 1 to 3, **characterized in that** the frame joints (15) are in the form of plain-bearing arrangements (21) which are arranged on the middle frame segment (2).

5. Draper header (1) according to Claim 4, **characterized in that** in each case one plain-bearing arrangement (21) is arranged in the region of a front wall (22), facing towards the cutter bar (5), and in each case one plain-bearing arrangement (21) is arranged in the region of a rear wall (23), facing away from the cutter bar (5), of the middle frame segment (2).

6. Draper header (1) according to one of the preceding claims, **characterized in that** the respective side segment (4) is positionable relative to the middle segment (3) by way of an actuatable actuator (7).

7. Draper header (1) according to one of the preceding claims, **characterized in that**, behind the cutter bar (5), there are arranged conveying devices which are in the form of in each case one endlessly circulating, laterally conveying conveyor belt (8) at the side segments (4) and an endlessly circulating conveyor belt (9) at the middle segment (3), which conveys perpendicularly to the adjacent conveyor belts (8).

8. Draper header (1) according to Claim 7, **characterized in that**, in a plane extending parallel to the supporting arms (17), provision is made of supporting elements (18) which are articulated pivotably at least on the outer frame segments (2A, 2B) of the side segments (4) and which support the conveyor belts (8) of the side segments (4).

9. Draper header (1) according to Claim 7 or 8, **characterized in that** the respective conveying device of the side segments (4) comprises a first deflection roller, arranged on the middle segment (3), and a second deflection roller, arranged at the end side on the respective side segment (4), around which the respective laterally conveying conveyor belt (8) circulates.

10. Draper header (1) according to one of Claims 7 to 9, **characterized in that** the conveyor belt (9) of the middle segment (3) and the conveyor belts (8) of the side segments (4) are operable at mutually independent belt speeds.

11. Draper header (1) according to one of Claims 7 to 10, **characterized in that** the plain-bearing arrangement (21) arranged in the region of the front wall (22) facing towards the cutter bar (5) is arranged substantially at the height of the supporting elements (18).

12. Combine harvester having a draper header (1) according to one of Claims 1 to 11.

## Revendications

1. Tête de récolte à tapis (1), comprenant
- un segment central (3) doté d'un segment de châssis central (2) et de deux segments latéraux (4) comportant chacun un segment de châssis extérieur (2A, 2B), le segment latéral (4) respectif étant relié de manière pivotante au segment central (3) par une articulation de châssis (15) comportant un axe de pivotement (14),
ainsi que
- une barre porte-lames (5) flexible qui suit un contour de sol en étant sensiblement en appui, par le fait que la barre porte-lames (5) est disposée sur des bras de support (17) qui sont articulés sur les segments de châssis (2, 2A, 2B), avec possibilité de pivotement autour d'un axe de rotation (19) s'étendant parallèlement à la barre porte-lames (5),
la barre porte-lames (5) pouvant être déplacée entre une position inférieure (24) et une position supérieure (25), par déviation des bras de support (17) autour de l'axe de rotation (19), à l'intérieur d'une plage de pivotement (28),
**caractérisée en ce que**
- les articulations de châssis (15) sont orientées en étant inclinées en direction du sol, de telle sorte qu'un prolongement virtuel (27) de l'axe de pivotement (14) respectif coupe la barre porte-lames (5) dans une position intermédiaire (26) entre la position inférieure (24) et la position supérieure (25), la plage de pivotement (28) étant limitée mécaniquement
- par une position extrême de la barre porte-lames (5) dans la position inférieure (24), et
- par une position extrême de la barre porte-lames (5) dans la position supérieure (25).

2. Tête de récolte à tapis (1) selon la revendication 1, **caractérisée en ce que** la barre porte-lames (5) présente, dans sa position intermédiaire (26), une distance sensiblement identique
- par rapport à la position extrême de la barre porte-lames (5) dans la position inférieure (24), et
- par rapport à la position extrême de la barre porte-lames (5) dans la position supérieure (25).

3. Tête de récolte à tapis (1) selon la revendication 1 ou 2, **caractérisée en ce que** les articulations de châssis (15) sont disposées sur le segment de châssis central (2).

4. Tête de récolte à tapis (1) selon une des revendications 1 à 3, **caractérisée en ce que** les articulations de châssis (15) sont réalisées sous forme d'ensembles de paliers lisses (21) disposés sur le segment de châssis central (2).

5. Tête de récolte à tapis (1) selon la revendication 4, **caractérisée en ce que** respectivement un ensemble de paliers lisses (21) est disposé dans la région d'une paroi avant (22) tournée vers la barre porte-lames (5), et respectivement un ensemble de paliers lisses (21) est disposé dans la région d'une paroi arrière (23) du segment de châssis central (2), qui est opposée à la barre porte-lames (5).

6. Tête de récolte à tapis (1) selon une des revendications précédentes, **caractérisée en ce que** le segment latéral (4) respectif peut être positionné par rapport au segment central (3) par un actionneur (7) susceptible d'être commandé.

7. Tête de récolte à tapis (1) selon une des revendications précédentes, **caractérisée en ce qu'**il est prévu derrière la barre porte-lames (5), des dispositifs de convoyage qui sont réalisés sur les segments latéraux (4), respectivement sous la forme d'une bande de convoyage (8) circulant sans fin et assurant un transport latéral, et qui sont réalisés sur le segment central (3) sous la forme d'une bande de convoyage (9) circulant sans fin et assurant un transport perpendiculaire aux bandes de convoyage (8) voisines.

8. Tête de récolte à tapis (1) selon la revendication 7, **caractérisée en ce qu'**il est prévu, dans un plan s'étendant parallèlement aux bras de support (17), au moins sur les segments de châssis extérieurs (2A, 2B) des segments latéraux (4), des éléments de support (18) qui sont articulées de manière pivotante et portent les bandes de convoyage (8) des segments latéraux (4).

9. Tête de récolte à tapis (1) selon la revendication 7 ou 8, **caractérisée en ce que** le dispositif de transport respectif des segments latéraux (4) comprend un premier rouleau de renvoi, disposé sur le segment central (3), et un deuxième rouleau de renvoi disposé côté extrémité sur le segment latéral (4) respectif, autour desquels circule la bande de convoyage (8) respective assurant le transport latéral.

10. Tête de récolte à tapis (1) selon une des revendications 7 à 9, **caractérisée en ce que** la bande de convoyage (9) du segment central (3) et les bandes de convoyage (8) des segments latéraux (4) peuvent fonctionner avec des vitesses de bande indépendantes les unes des autres.

11. Tête de récolte à tapis (1) selon une des revendications 7 à 10, **caractérisée en ce que** l'ensemble de paliers lisses (21) disposé dans la région de la paroi avant (22) tournée vers la barre porte-lames (5) est installé sensiblement à hauteur des éléments de support (18).

12. Moissonneuse-batteuse dotée d'une tête de récolte à tapis (1) selon une des revendications 1 à 11.
